# EUROPÄISCHE PATENTANMELDUNG

(11) **EP 2 777 978 A1**
(43) Veröffentlichungstag der Anmeldung: **17.09.2014**
(21) Anmeldenummer: 14154598.8
(22) Anmeldetag: 11.02.2014
(51) Int. Cl.: B60L 11/18, H01M 2/34, H01M 10/48, H02J 7/00

(54) **Verfahren und Vorrichtung zur Erhöhung der Sicherheit beim Gebrauch von Batteriemodulen**

(30) Priorität: 15.03.2013 DE 102013204520
(71) Anmelder: ROBERT BOSCH GMBH, 70442 Stuttgart (DE); Samsung SDI Co., Ltd., Yongin-si Gyeonggi-do 446-577 (KR)
(72) Erfinder: Fink, Holger, 70567 Stuttgart (DE)
(74) Vertreter: Bee, Joachim

(57) **Zusammenfassung**

Die Erfindung geht aus von einem Verfahren zur Herbeiführung eines sicheren Zustands eines Batteriemoduls eines Fahrzeugs, wobei der aktuelle Zustand des Batteriemoduls fortlaufend geprüft und bewertet wird und es sich bei dem herbeizuführenden sicheren Zustand des Batteriemoduls um einen solchen Zustand handelt, in dem Auswirkungen eines schadhaften Batteriemoduls vermindert werden und/oder die Wahrscheinlichkeit der Schädigung des Batteriemoduls verringert wird, wobei die Herbeiführung des sicheren Zustands vollzogen wird, wenn die Pole des Batteriemoduls weder zur Aufnahme noch zur Abgabe elektrischer Energie angeschlossen sind.

## Beschreibung

### Feld der Erfindung

Die vorliegende Erfindung bezieht sich auf ein Verfahren und eine Vorrichtung zur Erhöhung der Sicherheit beim Gebrauch von Batteriemodulen gemäß dem Oberbegriff der unabhängigen Patentansprüche.

### Stand der Technik

Aus dem Stand der Technik sind Sicherheitskonzepte für eigensichere Batteriemodule bekannt. Zum Stand der Technik gehören beispielsweise Schmelzsicherungen und Maßnahmen, die zu hohe Ströme und Spannungen im Bereich der Batteriemodule verhindern oder diesen entgegenwirken. Beispielsweise ist in der DE102011113798A1 eine modulare Batterie offenbart, bei der zur Vermeidung von in Zusammenhang mit der Batterie stehender Gefahren einzelne Serien- und Parallelschaltungen des Batteriemoduls an- und abgeschaltet werden können.

### Offenbarung der Erfindung

Die Erfindung geht aus von einem Verfahren zur Herbeiführung eines sicheren Zustands eines Batteriemoduls eines Fahrzeugs, wobei der aktuelle Zustand des Batteriemoduls fortlaufend geprüft und bewertet wird und es sich bei dem herbeizuführenden sicheren Zustand des Batteriemoduls um einen solchen Zustand handelt, in dem Auswirkungen eines schadhaften Batteriemoduls vermindert werden und/oder die Wahrscheinlichkeit einer Schädigung eines Batteriemoduls verringert wird.

Der Kern der Erfindung besteht darin, dass die Herbeiführung des sicheren Zustands gemäß der kennzeichnenden Merkmale der unabhängigen Ansprüche vollzogen wird, wenn die Pole des Batteriemoduls weder zur Aufnahme noch zur Abgabe elektrischer Energie angeschlossen sind.

Hintergrund der Erfindung ist die Erhöhung der Sicherheit im Umgang mit Batteriemodulen und die Verringerung der Wahrscheinlichkeit einer Schädigung eines Batteriemoduls und/oder die Verminderung der Auswirkungen von schadhaften Batteriemodulen auf die Umgebung. Eine von dem Umstand, dass die Pole des Batteriemoduls weder zur Aufnahme noch zur Abgabe elektrischer Energie angeschlossen sind, abhängige Herbeiführung des sicheren Zustands führt zu dem Vorteil, dass das Batteriemodul während des Zustands, in dem die Pole des Batteriemoduls weder zur Aufnahme noch zur Abgabe elektrischer Energie angeschlossen sind, sicher transportiert oder gelagert werden kann.

Erfindungsgemäß ist zudem eine Steuerung für ein eigensicheres Batteriemodul vorgesehen. Die Steuerung ist zur Herbeiführung eines sicheren Zustands des Batteriemoduls geeignet, wobei der aktuelle Zustand des Batteriemoduls fortlaufend geprüft und bewertet wird und es sich bei dem herbeizuführenden sicheren Zustand des Batteriemoduls um einen solchen Zustand handelt, in dem Auswirkungen eines schadhaften Batteriemoduls vermindert werden und/oder die Wahrscheinlichkeit der Schädigung eines Batteriemoduls verringert wird, wobei Mittel, zur Herbeiführung des sicheren Zustands, wenn die Pole des Batteriemoduls weder zur Aufnahme noch zur Abgabe elektrischer Energie angeschlossen sind, vorgesehen sind.

Ferner ist erfindungsgemäß ein eigensicheres Batteriemodul vorgesehen, wobei das eigensichere Batteriemodul gesteuert werden kann.

Weitere vorteilhafte Ausführungsformen der vorliegenden Erfindung sind Gegenstand der Unteransprüche.

Gemäß einer vorteilhaften Ausgestaltung trifft der Umstand, dass die Pole weder zur Aufnahme noch zur Abgabe elektrischer Energie angeschlossen sind, beispielsweise dann zu, wenn das Batteriemodul wenigstens transportiert oder gelagert wird.

Ferner ist es von Vorteil, wenn vorzugsweise im herbeigeführten sicheren Zustand des Batteriemoduls, in dem Auswirkungen eines schadhaften Batteriemoduls vermindert werden und/oder die Wahrscheinlichkeit der Schädigung des Batteriemoduls verringert wird, zwischen den Terminals des Batteriemoduls im Wesentlichen keine Spannung anliegt. Der damit verbundene Spannungsabbau führt zu einer weitestgehenden Spannungsfreiheit und damit zu einer Erhöhung der Sicherheit und zu einer Verringerung der Wahrscheinlichkeit einer Schädigung eines Batteriemoduls und/oder zu einer Verminderung der Auswirkungen eines schadhaften Batteriemoduls auf die Umgebung.

Vorzugsweise wird das Batteriemodul hinsichtlich eines Feinschlusses geprüft. Da ein Feinschluss im Batteriemodul zu einer Erhöhung der Temperatur im Batteriemodul führt, dient die frühzeitige Erkennung eines Feinschlusses sowie die dann eingeleiteten Maßnahmen der Erhöhung der Sicherheit des Batteriemoduls vor Temperaturschäden.

Gemäß einer weiteren vorteilhaften Ausführungsform wird das Batteriemodul zur Herbeiführung des sicheren Zustands des Batteriemoduls, in dem Auswirkungen eines schadhaften Batteriemoduls vermindert werden und/oder die Wahrscheinlichkeit der Schädigung des Batteriemoduls verringert wird, insbesondere nach einem Feinschluss des Batteriemoduls weitestgehend vollständig entladen. Die weitestgehend vollständige Entladung des Batteriemoduls, insbesondere nach einem Feinschluss des Batteriemoduls, führt zu einer weitestgehenden Ladungsfreiheit des Batteriemoduls und damit zu einer Erhöhung der Sicherheit und zu einer Verringerung der Wahrscheinlichkeit einer Schädigung des Batteriemoduls und/oder zu einer Verminderung der Auswirkungen des schadhaften Batteriemoduls.

Vorzugsweise werden zur Herbeiführung des sicheren Zustands des Batteriemoduls, in dem Auswirkungen eines schadhaften Batteriemoduls vermindert werden und/oder die Wahrscheinlichkeit der Schädigung eines Batteriemoduls verringert wird, ein Strombypass zwischen den Terminals des Batteriemoduls geschaltet und/oder eine Entladevorrichtung, insbesondere ein Discharge Device, im Bereich des Batteriemoduls verwendet.

Die erfindungsgemäße Schaltung eines Strombypass zwischen den Terminals des Batteriemoduls und die Verwendung einer Entladevorrichtung des Batteriemoduls führt zu einer Verminderung der Auswirkungen eines schadhaften Batteriemoduls auf die Umgebung und/oder zu einer Verringerung der Wahrscheinlichkeit einer Schädigung eines Batteriemoduls.

Vorteilhaft handelt es sich bei dem Umstand, dass die Pole der Batterie weder zur Aufnahme noch zur Abgabe elektrischer Energie angeschlossen sind, insbesondere um einen solchen Umstand, dass die Batterie wenigstens transportiert oder gelagert wird. Ferner wird vorteilhaft für den Fall, dass die Pole der Batterie weder zur Aufnahme noch zur Abgabe elektrischer Energie angeschlossen sind und die Batterie wenigstens transportiert oder gelagert wird, der sichere Zustand des Batteriemoduls, in dem Auswirkungen eines schadhaften Batteriemoduls auf die Umgebung vermindert werden und/oder die Wahrscheinlichkeit der Schädigung des Batteriemoduls verringert wird, herbeigeführt.

Mit der Realisierung eines für den Fall, dass die Pole der Batterie weder zur Aufnahme noch zur Abgabe elektrischer Energie angeschlossen sind, eigensicheren Batteriemoduls können die Anforderungen an die Elektronik eines Batteriemanagementsystems diesbezüglich deutlich reduziert werden. Die Reduktion der Anforderung an die Elektronik des Batteriemanagementsystems kann beispielsweise darin bestehen, dass nicht wie bisher mehrere verschiedene Parameter zur Bestimmung des Umstands ob Lithium-Plating eingetreten ist, berücksichtigt und überwacht werden müssen sondern nun eine Kenngröße die auf den Ladestrom des Batteriemoduls schließen lässt. Zusätzlich kann die Sicherheit insbesondere von Batteriesystemen mit hoher Speicherkapazität, wie sie z.B. bei Elektro- und Hybridfahrzeugen zum Einsatz kommen, signifikant erhöht werden. Grund für die Erhöhung der Sicherheit von Batteriesystemen mit hoher Speicherkapazität ist, dass diese eine Wahrscheinlichkeit für Lithium-Plating aufweisen. Die Wahrscheinlichkeit für Lithium-Plating geht mit der Höhe der Speicherkapazität einher.

Gemäß einer weiteren vorteilhaften Ausführungsform wird die Herbeiführung des sicheren Zustands des Batteriemoduls, in dem Auswirkungen eines schadhaften Batteriemoduls vermindert werden und/oder die Wahrscheinlichkeit der Schädigung der Batteriemoduls verringert wird, unter Berücksichtigung wenigstens des Ladezustands des Batteriemoduls oder des Grades der mechanischen Unversehrtheit des Batteriemoduls oder des Drucks im Inneren des Batteriemoduls oder der Temperatur des Batteriemoduls oder des eingesetzten Chemiesystems des Batteriemoduls vollzogen.

Die erfindungsgemäße Berücksichtigung wenigstens einer der den Zustand des Batteriemoduls charakterisierenden Zustandsgröße oder des eingesetzten Chemiesystems ist für die Wahl der einzuleitenden Maßnahme wichtig: Wenigstens in Abhängigkeit des Zustands des Batteriemoduls oder des eingesetzten Chemiesystems, kann mit einer angemessenen Maßnahme reagiert werden. Falsche, die Auswirkungen eines schadhaften Batteriemoduls gegebenenfalls verstärkende Maßnahmen werden genauso vermieden, wie falsche, gegebenenfalls übertriebene Maßnahmen.

Vorteilhaft wird gemäß einer Ausgestaltung der Erfindung wenigstens der Ladezustand des Batteriemoduls oder der Grad der mechanischen Unversehrtheit des Batteriemoduls oder der Druck im Inneren des Batteriemoduls oder die Temperatur des Batteriemoduls oder der aktuelle Zustand des Batteriemoduls bezüglich seiner Sicherheit sensorisch ermittelt.

Ferner werden gemäß einer vorzugsweisen Ausgestaltung der Erfindung Informationen über wenigstens den zeitlichen Verlauf des Ladestroms des Batteriemoduls oder die Leistungsfähigkeit des Batteriemoduls oder die entnehmbare Ladung des Batteriemoduls an wenigstens ein Batteriemanagementsystem oder eine Wareneingangskontrolle für Batteriemodule, insbesondere für eigensichere Batteriemodule, oder eine Fertigungseinrichtung für Batteriemodule, insbesondere für eigensichere Batteriemodule, übermittelt. Die Verwendung von Informationen über wenigstens den zeitlichen Verlauf des Ladestroms des Batteriemoduls oder die Leistungsfähigkeit des Batteriemoduls oder die entnehmbare Ladung des Batteriemoduls dient der Erhöhung der Sicherheit bei der Fertigung der Batteriemodule.

Weiterhin ist es vorteilhaft, wenn für das eigensichere Batteriemodul zur Bestimmung des aktuellen Zustands des Batteriemoduls mindestens ein Sensor zur Erfassung physikalischer Größen des Batteriemoduls vorgesehen ist.

Gemäß einer weiteren vorteilhaften Ausführungsform sind für das eigensichere Batteriemodul Mittel zur Herbeiführung des sicheren Zustands des Batteriemoduls unter Berücksichtigung wenigstens eines sensorisch ermittelten Ladezustands des Batteriemoduls oder eines sensorisch ermittelten Grades der mechanischen Unversehrtheit des Batteriemoduls oder eines sensorisch ermittelten Drucks im Inneren des Batteriemoduls oder einer sensorisch ermittelten Temperatur des Batteriemoduls oder eines eingesetzten Chemiesystems des Batteriemoduls oder eines sensorisch ermittelten aktuellen Zustands des Batteriemoduls bezüglich seiner Sicherheit, vorgehen.

Darüber hinaus ist es vorteilhaft, wenn für das eigensichere Batteriemodul Mittel zur Voraussage wenigstens des zeitlichen Verlaufs des Ladestroms des Batteriemoduls oder der Leistungsfähigkeit des Batteriemoduls oder der entnehmbaren Ladung des Batteriemoduls vorgesehen sind.

Die Verwendung von Informationen und/oder Daten, die den zeitlichen Verlauf von Ladestrom, Leistungsfähigkeit und Ladung des Batteriemoduls betreffen, nützt gemäß einer weiteren vorteilhaften Ausführungsform der Wahl einer angemessenen Maßnahme zur Verminderung der Auswirkungen eines schadhaften Batteriemoduls und/oder zur Verringerung der Wahrscheinlichkeit der Schädigung eines Batteriemoduls.

Vorzugsweise sind gemäß einer Ausgestaltung der Erfindung Mittel zur Weitergabe von Informationen über wenigstens den zeitlichen Verlauf des Ladestroms des Batteriemoduls oder die Leistungsfähigkeit des Batteriemoduls oder die entnehmbare Ladung des Batteriemoduls an wenigstens ein Batteriemanagementsystem oder an eine Wareneingangskontrolle für Batteriemodule oder an eine Fertigungseinrichtung für Batteriemodule vorgesehen.

Weiterhin ist vorteilhaft, wenn für das eigensichere Batteriemodul zur Herbeiführung des sicheren Zustands des Batteriemoduls mindestens ein Aktor vorgesehen ist.

Darüber hinaus ist es vorteilhaft, wenn für das eigensichere Batteriemodul Mittel vorgesehen sind, mit denen eine Aktorik zur Herbeiführung des sicheren Zustands des Batteriemoduls, insbesondere eine Vorrichtung zum Legen eines Strombypass und/oder eine Entladevorrichtung (Discharge Device) und/oder eine Aktorik zur Schaltung der Ausgangsspannung des Batteriemoduls angesteuert und bedient wird, wobei mit der Aktorik, für den Fall, dass die Pole des Batteriemoduls weder zur Aufnahme noch zur Abgabe elektrischer Energie angeschlossen sind, der Strombypass im Bereich des Batteriemoduls, insbesondere zwischen den Anschlüssen des Batteriemoduls geschaltet wird und/oder mit einer Sensorik eine Feinschlusserkennung durchgeführt wird und zu diesem Zweck die zeitlichen Verläufe der Spannung des Batteriemoduls und/oder der Temperatur des Batteriemoduls aufgezeichnet und überwacht werden und, für den Fall, dass eine erhöhte Selbstentladung des Batteriemoduls auftritt, die Entladevorrichtung aktiviert und das Batteriemodul weitestgehend vollständig entladen wird. Der Umstand, ob eine erhöhte Selbstentladung eingetreten ist wird anhand des Ladezustands des Batteriemoduls bestimmt. Der Ladezustand des Batteriemoduls kann anhand der an den Anschlüssen des Batteriemoduls anliegenden Spannung ermittelt werden. Bei regulärem Betrieb des Batteriemoduls liegt beispielsweise bei einem Ladezustand von 100% eine Spannung von ungefähr N x 4,2V, wobei N der Anzahl der in einer Serie geschalteten Batteriezellen im Batteriemodul entspricht, an. Ab Erreichen oder Unterschreiten eines Spannungswertes zwischen N x 3V und 0V, wobei N der Anzahl der in einer Serie geschalteten Batteriezellen im Batteriemodul entspricht, nähert sich der Ladezustand des Batteriemoduls 0% und damit einem kritischen Zustand.

Die vorteilhafte Ausführungsform, die zur Verminderung der Auswirkungen eines schadhaften Batteriemoduls und/oder zur Verringerung der Wahrscheinlichkeit einer Schädigung des Batteriemoduls vorzunehmende Maßnahme in Abhängigkeit des Zustands des Batteriemoduls einzuleiten, führt zu dem Vorteil, dass nur angemessene Maßnahmen eingeleitet werden. Falsche, die Auswirkungen eines schadhaften Batteriemoduls gegebenenfalls verstärkende Maßnahmen werden genauso vermieden, wie falsche, gegebenenfalls übertriebene Maßnahmen.

Vorteilhafterweise wird wenigstens das oben beschriebene Verfahren oder die Vorrichtung oder die Steuerung oder ein eigensicheres Batteriemodul wenigstens in der Fahrzeugtechnik oder in der Energietechnik verwendet.

### Kurze Beschreibung der Zeichnungen

Im folgenden Abschnitt wird die Erfindung anhand von Ausführungsbeispielen, aus denen sich weitere erfinderische Merkmale ergeben können, auf die die Erfindung aber in ihrem Umfang nicht beschränkt ist, erläutert. Die Ausführungsbeispiele sind in den Zeichnungen dargestellt.

Es zeigt:
- Fig. 1: eine schematische Darstellung eines eigensicheren Batteriemoduls;
- Fig. 2: eine schematische Darstellung des Verfahrens zur Erhöhung der Sicherheit beim Gebrauch eigensicherer Batteriemodule für den Fall, dass die Pole des Batteriemoduls weder zur Aufnahme noch zur Abgabe elektrischer Energie angeschlossen sind,
- und Fig. 3: ein grundsätzliches Schaltbild eines eigensicheren Batteriemoduls, das zur Herbeiführung eines sicheren Zustands des Batteriemoduls für den Fall, dass die Pole des Batteriemoduls weder zur Aufnahme noch zur Abgabe elektrischer Energie angeschlossen sind, geeignet ist.

### Ausführungsformen der Erfindung

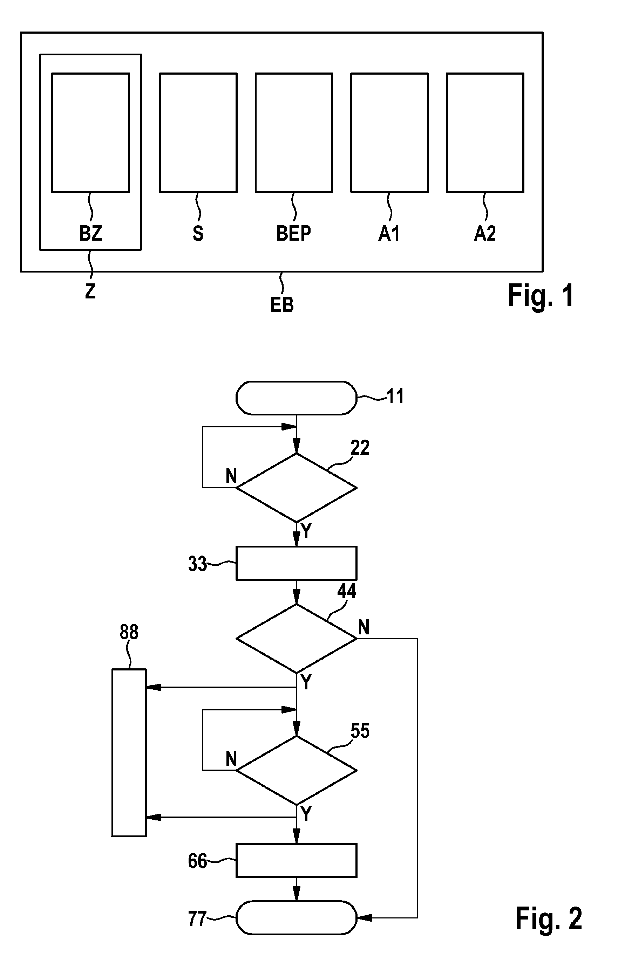

In Fig. 1 ist ein eigensicheres Batteriemodul EB schematisch dargestellt. Bei einem eigensicheren Batteriemodul EB wird allgemein der aktuelle Zustand des Batteriemoduls fortlaufend geprüft und bewertet und es wird bei Bedarf ein sicherer Zustand des Batteriemoduls herbeigeführt. Bei dem herbeizuführenden sicheren Zustand des Batteriemoduls handelt es sich um einen solchen Zustand, in dem Auswirkungen eines schadhaften Batteriemoduls vermindert werden und/oder die Wahrscheinlichkeit einer Schädigung eines Batteriemoduls verringert wird. Zu diesem Zweck verfügt das eigensichere Batteriemodul EB beispielsweise über ein geeignetes Sensor- und Aktorkonzept zur Realisierung der Eigensicherheit.

Das eigensichere Batteriemodul EB enthält mindestens ein Zellmodul Z, das mindestens eine Batteriezelle BZ enthält. Die mindestens eine Batteriezelle BZ setzt sich aus mechanischen Komponenten und wenigstens einer elektrochemischen Komponente zusammen. Die elektrochemische Komponente wird auch als Chemiesystem des eigensicheren Batteriemoduls EB bezeichnet. Beispielhaft handelt es sich bei der mindestens einen Batteriezelle BZ um eine Lithium-Ionen-Batteriezelle. Vorzugsweise ist weiterhin eine Sensorik S enthalten, mit der zumindest die Spannung des eigensicheren Batteriemoduls EB oder der Strom, mit dem das eigensichere Batteriemoduls EB entladen werden kann, oder die Temperatur des eigensicheren Batteriemoduls EB oder der Druck im Inneren des eigensicheren Batteriemoduls EB ermittelt werden kann.

Vorzugsweise ist ferner wenigstens eine Komponente BEP zur Batteriezustandserkennung oder zur Voraussage von Batteriezuständen des eigensicheren Batteriemoduls EB oder zur Erkennung oder zur Voraussage von Batteriezustandsgrößen des eigensicheren Batteriemoduls EB enthalten. Vorzugsweise ist ferner eine Aktorik A1 zur Herbeiführung eines sicheren Zustands des eigensicheren Batteriemoduls EB enthalten; mit der Aktorik A1 kann vorzugsweise wenigstens ein Strombypass zwischen elektrischen Anschlüssen des eigensicheren Batteriemoduls EB geschaltet oder eine Entladevorrichtung, insbesondere ein Discharge Device, im Bereich des eigensicheren Batteriemoduls EB zur Anwendung gebracht werden. Zum Zweck der Anwendung wird die Entladevorrichtung dann mit den Anschlüssen des eigensicheren Batteriemoduls EB elektrisch verbunden.

Wird der Strombypass zwischen den elektrischen Anschlüssen des eigensicheren Batteriemoduls EB geschaltet, kann zwischen den elektrischen Anschlüssen des eigensicheren Batteriemoduls EB ein elektrischer Strom fließen, ohne dass dieser Strom durch die elektrochemische Komponente der mindestens einen Batteriezelle BZ des eigensicheren Batteriemoduls EB fließt. Der Strombypass kann auch zwischen den Anschlüssen der mindestens einen Batteriezelle BZ geschaltet werden.

Vorzugsweise ist ferner eine Aktorik A2 enthalten; mit der Aktorik A2 kann die Ausgangsspannung des eigensicheren Batteriemoduls EB zumindest gesteuert oder in ihrer Höhe variiert werden.

In Fig. 2 ist ein Verfahren zur Erhöhung der Sicherheit beim Gebrauch von eigensicheren Batteriemodulen EB schematisch dargestellt. In einem ersten Verfahrensschritt 11 wird das Verfahren eingeleitet. In einem darauf folgenden Anschlussprüfungsschritt 22 wird geprüft, ob die Pole des eigensicheren Batteriemoduls EB weder zur Aufnahme noch zur Abgabe elektrischer Energie angeschlossen sind. Wenn die Pole des eigensicheren Batteriemoduls EB zur Aufnahme oder Abgabe elektrischer Energie angeschlossen sind, wird Anschlussprüfungsschritt 22 wiederholt.

Sind hingegen die Pole des eigensicheren Batteriemoduls EB weder zur Aufnahme noch zur Abgabe elektrischer Energie angeschlossen, wird zunächst in einem Strombypassschritt 33 ein Strombypass zwischen den elektrischen Anschlüssen des eigensicheren Batteriemoduls EB geschaltet, so das zwischen den elektrischen Anschlüssen des eigensicheren Batteriemoduls EB ein elektrischer Strom fließen kann, ohne dass dieser Strom durch die elektrochemische Komponente der mindestens einen Batteriezelle BZ des eigensicheren Batteriemoduls EB fließt. Dann wird vorzugsweise in einem ersten Feinschlussprüfungsschritt 44 geprüft, ob im Bereich des eigensicheren Batteriemoduls EB ein Feinschluss vorliegt. Zur Prüfung und Feststellung, ob der Feinschluss im Bereich des eigensicheren Batteriemoduls EB stark vorliegt, können die zeitlichen Verläufe der Spannung des eigensicheren Batteriemoduls EB und/oder die Temperatur des eigensicheren Batteriemoduls EB aufgezeichnet, herangezogen und bewertet werden. Ein beispielhafter Wert der Spannung des eigensicheren Batteriemoduls EB, ab dessen Erreichen und/oder Unterschreiten ein Feinschluss im Bereich des eigensicheren Batteriemoduls EB vorliegen kann, liegt zwischen 0V bis N x 1,3V, wobei N der Anzahl der in einer Serie geschalteten Batteriezellen im Batteriemodul entspricht. Ein beispielhafter Wert der Temperatur des eigensicheren Batteriemoduls EB, ab dessen Erreichen und/oder Überschreiten ein Feinschluss im Bereich des eigensicheren Batteriemoduls EB vorliegen kann, liegt zwischen 80 °C bis 100 °C.

Liegt kein Feinschluss im Bereich des eigensicheren Batteriemoduls EB vor, wird das Verfahren in Abschlussschritt 77 abgeschlossen.

Liegt hingegen ein Feinschluss im Bereich des eigensicheren Batteriemoduls EB vor, wird in Ladungsprüfungsschritt 55 geprüft, ob eine erhöhte Selbstentladung des eigensicheren Batteriemoduls EB vorliegt. Der Umstand, ob eine erhöhte Selbstentladung eingetreten ist wird anhand des Ladezustands des Batteriemoduls bestimmt. Der Ladezustand des Batteriemoduls kann anhand der an den Anschlüssen des Batteriemoduls anliegenden Spannung ermittelt werden. Bei regulärem Betrieb des Batteriemoduls liegt beispielsweise bei einem Ladezustand von 100% eine Spannung von ungefähr N x 4,2V, wobei N der Anzahl der in einer Serie geschalteten Batteriezellen im Batteriemodul entspricht, an. Ab Erreichen oder Unterschreiten eines Spannungswertes zwischen N x 3V und 0V, wobei N der Anzahl der in einer Serie geschalteten Batteriezellen im Batteriemodul entspricht, nähert sich der Ladezustand des Batteriemoduls 0% und damit einem kritischen Zustand.

Liegt keine erhöhte Selbstentladung des eigensicheren Batteriemoduls EB vor, wird Ladungsprüfungsschritt 55 erneut durchgeführt.

Liegt hingegen eine erhöhte Selbstentladung des eigensicheren Batteriemoduls EB vor, wird in Entladungsschritt 66 die Entladevorrichtung aktiviert und das eigensichere Batteriemodul EB weitestgehend vollständig entladen. Das Verfahren wird dann anschließend in Abschlussschritt 77 abgeschlossen.

Sämtliche in den oben beschriebenen Verfahrensschritten aufgeführte Zustandsgrößen des eigensicheren Batteriemoduls EB werden beispielsweise mit Hilfe der Sensorik S ermittelt. Die Prüfung und Bewertung der Zustandsgrößen wird dabei vorzugsweise durch die Komponente BEP zur Batteriezustandserkennung durchgeführt. Die in den Verfahrensschritten durchgeführten aktorischen Vorgänge werden beispielsweise mittels der Aktoren A1, A2 vorgenommen.

Alternativ zu der Sensorik S, die Teil des eigensicheren Batteriemoduls EB ist, können weitere, außerhalb des eigensicheren Batteriemoduls EB bestehende Sensoren zur Ermittlung von Zustandsgrößen des eigensicheren Batteriemoduls EB verwendet werden. Beispielsweise kann es sich dabei um Sensoren handeln, die zur Ausstattung eines Fahrzeugs gehören, mit dem das eigensichere Batteriemodul EB transportiert wird. Beispielhaft kann es sich dabei um Sensoren zur Bestimmung elektrischer Größen - wie Strom oder Spannung - oder zur Bestimmung von Temperatur im Inneren des Fahrzeugs, mit dem das eigensichere Batteriemodul EB transportiert wird, oder Druck handeln. Bei den Sensoren zur Bestimmung von Temperatur im Inneren des Fahrzeugs, mit dem das eigensichere Batteriemodul EB transportiert wird, handelt es sich beispielsweise um Sensoren des Klimageräts des Fahrzeugs, mit dem das eigensichere Batteriemodul EB transportiert wird, und/oder um Sensoren zur Bestimmung der Außentemperatur des Fahrzeugs, mit dem das eigensichere Batteriemodul EB transportiert wird. Auch im Fall der Lagerung des eigensicheren Batteriemoduls EB können außerhalb des eigensicheren Batteriemoduls EB bestehende Sensoren zur Ermittlung von Zustandsgrößen des eigensicheren Batteriemoduls EB verwendet werden. Bei diesen außerhalb des eigensicheren Batteriemoduls bestehenden Sensoren kann es sich beispielsweise um Temperatursensoren handeln.

Über das oben beschriebene Verfahren hinaus bestehen weitere beispielhafte Möglichkeiten zur Erhöhung der Sicherheit in Zusammenhang mit der Verwendung eines eigensicheren Batteriemoduls EB: Informationen wie etwa der Umstand, dass im Bereich des eigensicheren Batteriemoduls EB ein Feinschluss vorliegt und/oder Informationen, beispielsweise die zeitlichen Verläufe der Spannung des eigensicheren Batteriemoduls EB und/oder die Temperatur des eigensicheren Batteriemoduls EB, die der Prüfung des Umstandes eines Feinschlusses im Bereich des eigensicheren Batteriemoduls EB dienen und/oder der Umstand, dass eine erhöhte Selbstentladung im Bereich des eigensicheren Batteriemoduls EB vorliegt, und/oder Informationen über den zeitlichen Verlauf des Ladestroms des eigensicheren Batteriemoduls EB und/oder der Leistungsfähigkeit des eigensicheren Batteriemoduls EB und/oder der entnehmbaren Ladung des eigensicheren Batteriemoduls EB können gemäß einer weiteren vorteilhaften Ausgestaltung der Erfindung vorzugsweise mittels geeigneter Kommunikationsschnittstellen in Weitergabeschritt 88 an andere Systeme weitergegeben werden. Es kann sich bei diesen anderen Systemen beispielsweise wenigstens um ein Batteriemanagementsystem oder eine Wareneingangskontrolle für Batteriemodule, insbesondere eigensichere Batteriemodule EB, oder eine Fertigungseinrichtung für Batteriemodule, insbesondere eigensichere Batteriemodule EB, handeln.

Die beschriebene Verwendung eines eigensicheren Batteriemoduls EB ist in der Fahrzeugtechnik und auch in der Energietechnik möglich.

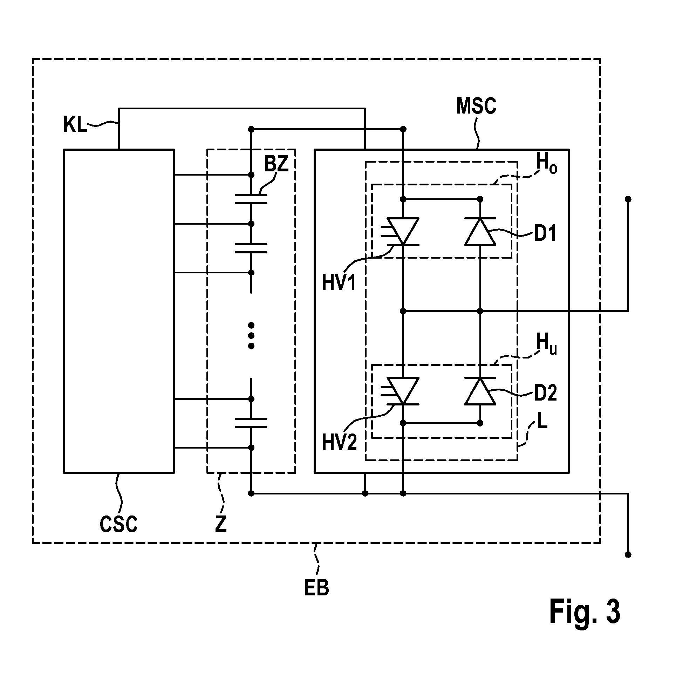

In Fig. 3 ist ein grundsätzliches Schaltbild eines eigensicheren Batteriemoduls E B dargestellt.

Im grundsätzlichen Schaltbild ist ein Zellmodul Z, eine

Zellüberwachungselektronik CSC und eine Modulüberwachungselektronik MSC dargestellt.

Das Zellmodul Z enthält mindestens eine Batteriezelle BZ. Beispielhaft handelt es sich bei der mindestens einen Batteriezelle BZ um eine Lithium-lonen-Batteriezelle.

Die Zellüberwachungselektronik CSC enthält eine in Figur 3 nicht dargestellte Sensorik S zur Erfassung eines Zustands der mindestens einen Batteriezelle BZ.

Die Zellüberwachungselektronik CSC dient der Überwachung der mindestens einen Batteriezelle BZ innerhalb des Zellmoduls Z.

Die Modulüberwachungselektronik MSC kommuniziert mit der Zellüberwachungselektronik CSC. Die Kommunikation zwischen Zellüberwachungselektronik CSC und Modulüberwachungselektronik MSC kann drahtlos oder drahtgebunden über eine Kommunikationsleitung KL erfolgen. Im Rahmen der Kommunikation zwischen der Modulüberwachungselektronik MSC und der Zellüberwachungselektronik CSC werden Daten über mindestens eine Batteriezelle BZ übertragen. Ferner verfügt die Modulüberwachungselektronik MSC über eine nicht dargestellte Sensorik S zur Überwachung des Zellmoduls Z.

In Abhängigkeit des Zustands der mindestens einen Batteriezelle BZ oder des Zellmoduls Z agiert die Modulüberwachungselektronik MSC. Die Modulüberwachungselektronik MSC enthält zu diesem Zweck wenigstens zwei ein- und ausschaltbare Halbleiterventile HV1 und HV2 und zwei Dioden D1 und D2. Je ein ausschaltbares Halbleiterventil und eine Diode bilden eine Halbbrückenanordnung. Eine obere Halbbrückenanordnung wird in der Zeichnung mit Hₒ, eine untere Halbbrückenanordnung mit Hᵤ bezeichnet. Die obere Halbbrückenanordnung und die untere Halbbrückenanordnung bilden einen steuerbaren Leistungsschalter L.

Im Normalfall, beispielsweise dem regulären Betriebszustand eines eigensicheren Batteriemoduls EB, wenn die Pole des eigensicheren Batteriemoduls EB zur Aufnahme oder zur Abgabe elektrischer Energie angeschlossen sind, ist die obere Halbbrückenanordnung Hₒ eingeschaltet, die untere Halbbrückenanordnung Hᵤ ist ausgeschaltet. In diesem Zustand führt die Zellüberwachungselektronik CSC einen Ladungsausgleich zwischen mindestens zwei Batteriezellen BZ durch.

Erkennt die Modulüberwachungselektronik MSC eine drohende Tiefentladung wenigstens des Zellmoduls Z oder mindestens einer Batteriezelle BZ, wird die obere Halbbrückenanordnung Hₒ aus- und die untere Halbbrückenanordnung Hᵤ eingeschaltet. Der Strom, der durch das Zellmodul Z fließt , fließt dann über die untere Halbbrückenanordnung Hᵤ; wenigstens das Zellmodul Z oder mindestens die Batteriezelle BZ werden dabei nicht weiter entladen.

Erkennt die Modulüberwachungselektronik MSC eine drohende Überlastung wenigstens des Zellmoduls Z oder mindestens einer Batteriezelle BZ, beispielsweise bei zu hohen Ladeströmen, wird die obere Halbbrückenanordnung Hₒ aus- und die untere Halbbrückenanordnung Hᵤ eingeschaltet. Der Strom, der durch das Zellmodul Z fließt , fließt dann über die untere Halbbrückenanordnung Hᵤ; wenigstens das Zellmodul Z oder mindestens die Batteriezelle BZ werden nicht mit unzulässig hohen Entladeströmen belastet.

Erkennt die Modulüberwachungselektronik MSC eine drohende Überlastung wenigstens des Zellmoduls Z oder mindestens einer Batteriezelle BZ durch zu hohe Ladeströme, beispielsweise bei sehr tiefen Temperaturen, beispielsweise bei Temperaturen unterhalb von 0° Celsius, einer Batteriezelle BZ, wird die obere Halbbrückenanordnung Hₒ aus- und die untere Halbbrückenanordnung Hᵤ eingeschaltet. Der Strom, der durch das Zellmodul Z fließt , fließt dann über die untere Halbbrückenanordnung Hᵤ; wenigstens das Zellmodul Z oder mindestens die Batteriezelle BZ werden nicht mit unzulässig hohen Ladeströmen bei tiefen Temperaturen belastet. Hintergrund der Vermeidung unzulässig hoher Ladeströme bei tiefen Temperaturen ist die Vermeidung von Lithium-Plating. Bei dem Lithium-Plating handelt es sich um eine Ablagerung von Lithium an der Anode einer Batterie. Diese Ablagerung von Lithium kann zu Kapazitätsverlusten, erhöhten Widerständen und Kurzschlüssen bei Ladevorgängen führen.

Wird der Modulüberwachungselektronik MSC durch die Sensorik S mitgeteilt, dass ein irregulärer Betriebszustand des eigensicheren Batteriemoduls EB, insbesondere ein Feinschluss im Bereich des eigensicheren Batteriemoduls EB vorliegt, kann das Modul über eine der Halbbrücken Hₒ, Hᵤ entladen werden. Zu diesem Zweck wird die obere Halbbrückenanordnung Hₒ als steuerbarer Widerstand betrieben und die untere Halbbrückenanordnung Hᵤ eingeschaltet. Das Zellmodul Z gibt an seinen Anschlüssen dann keine Spannung ab und wird trotzdem langsam entladen. Die Zeitdauer des Entladevorgangs reicht beispielsweise von einigen Stunden bis zu wenigen Tagen.

Für den Fall, dass die Pole des eigensicheren Batteriemoduls EB weder zur Aufnahme noch zur Abgabe elektrischer Energie angeschlossen sind, wird mittels der Modulüberwachungselektronik MSC die obere Halbbrückenanordnung Hₒ aus- und die untere Halbbrückenanordnung Hᵤ eingeschaltet. Der Strom, der durch das Zellmodul Z fließt , fließt dann über die untere Halbbrückenanordnung Hᵤ.

Neben der in Fig. 3 dargestellten Überwachung der Batteriezellen mittels einer Zellüberwachungselektronik ist eine batteriezelleneigene Überwachung durch je eine, einer der mindestens einen Batteriezelle BZ zugeordnete, Zellüberwachungselektronik CSC möglich. Dazu wird jeder Batteriezelle BZ eine eigene Unter-Zellüberwachungselektronik zugeordnet. Diese Unter-Zellüberwachungselektroniken kommunizieren mit einer Haupt-Zellüberwachungselektronik. Die Haupt-Zellüberwachungselektronik kommuniziert mit der Modulüberwachungselektronik MSC, die, unter anderem in Abhängigkeit von der der Haupt-Zellüberwachungselektronik kommunizierten Information, agiert.

## Patentansprüche

1. Verfahren zur Herbeiführung eines sicheren Zustands eines Batteriemoduls, wobei der aktuelle Zustand des Batteriemoduls fortlaufend geprüft und bewertet wird und es sich bei dem herbeizuführenden sicheren Zustand des Batteriemoduls um einen solchen Zustand handelt, in dem Auswirkungen eines schadhaften Batteriemoduls vermindert werden und/oder die Wahrscheinlichkeit der Schädigung des Batteriemoduls verringert wird,
**dadurch gekennzeichnet, dass**
die Herbeiführung des sicheren Zustands vollzogen wird, wenn die Pole des Batteriemoduls in einem Ausgangszustand vor der Herbeiführung des sicheren Zustands weder zur Aufnahme noch zur Abgabe elektrischer Energie angeschlossen sind.

2. Verfahren nach Anspruch 1,
**dadurch gekennzeichnet, dass**
der Umstand, dass die Pole des Batteriemoduls weder zur Aufnahme noch zur Abgabe elektrischer Energie angeschlossen sind, beispielsweise dann eintritt, wenn das Batteriemodul transportiert und/oder gelagert wird.

3. Verfahren nach einem der vorhergehenden Ansprüche,
**dadurch gekennzeichnet, dass**
im herbeigeführten sicheren Zustand des Batteriemoduls, in dem Auswirkungen eines schadhaften Batteriemoduls vermindert werden und/oder die Wahrscheinlichkeit der Schädigung des Batteriemoduls verringert wird, zwischen den Terminals des Batteriemoduls im Wesentlichen keine Spannung anliegt.

4. Verfahren nach einem der vorhergehenden Ansprüche,
**dadurch gekennzeichnet, dass**
das Batteriemoduls hinsichtlich eines Feinschlusses geprüft wird.

5. Verfahren nach einem der vorhergehenden Ansprüche,
**dadurch gekennzeichnet, dass**
zur Herbeiführung des sicheren Zustands des Batteriemoduls, in dem Auswirkungen eines schadhaften Batteriemoduls vermindert werden und/oder die Wahrscheinlichkeit der Schädigung des Batteriemoduls verringert wird, das Batteriemodul, insbesondere nach einem Feinschluss des Batteriemoduls, weitestgehend vollständig entladen wird.

6. Verfahren nach einem der vorhergehenden Ansprüche,
**dadurch gekennzeichnet, dass**
zur Herbeiführung des sicheren Zustands des Batteriemoduls, in dem Auswirkungen eines schadhaften Batteriemoduls vermindert werden und/oder die Wahrscheinlichkeit der Schädigung des Batteriemoduls verringert wird, ein Strombypass zwischen den Terminals des Batteriemoduls geschaltet und/oder eine Entladevorrichtung, insbesondere ein Discharge Device, im Bereich des Batteriemoduls verwendet wird.

7. Verfahren nach einem der vorhergehenden Ansprüche,
**dadurch gekennzeichnet, dass**
die Herbeiführung des sicheren Zustands des Batteriemoduls, in dem Auswirkungen eines schadhaften Batteriemoduls vermindert werden und/oder die Wahrscheinlichkeit der Schädigung des Batteriemoduls verringert wird, unter Berücksichtigung des Ladezustands des Batteriemoduls und/oder des Grades der mechanischen Unversehrtheit des Batteriemoduls und/oder des Drucks im Inneren des Batteriemoduls und/oder der Temperatur des Batteriemoduls und/oder des eingesetzten Chemiesystems des Batteriemoduls vollzogen wird.

8. Verfahren nach Anspruch 7,
**dadurch gekennzeichnet, dass**
der Ladezustand des Batteriemoduls und/oder der Grad der mechanischen Unversehrtheit des Batteriemoduls und/oder der Druck im Inneren des Zustand des Batteriemoduls bezüglich seiner Sicherheit sensorisch ermittelt werden.

9. Verfahren nach einem der vorhergehenden Ansprüche,
**dadurch gekennzeichnet, dass**
Informationen über den zeitlichen Verlauf des Ladestroms des Batteriemoduls und/oder der Leistungsfähigkeit des Batteriemoduls und/oder der entnehmbaren Ladung des Batteriemoduls an ein Batteriemanagementsystem und/oder an eine Wareneingangskontrolle für Batteriemodule und/oder an eine Fertigungseinrichtung für Batteriemodule übermittelt werden.

10. Steuerung für ein eigensicheres Batteriemodul (EB), geeignet zur Herbeiführung eines sicheren Zustands des Batteriemoduls, mittels der der aktuelle Zustand des Batteriemoduls fortlaufend geprüft und bewertet wird und es sich bei dem herbeizuführenden sicheren Zustand des Batteriemoduls um einen solchen Zustand handelt, in dem Auswirkungen eines schadhaften Batteriemoduls vermindert werden und/oder die Wahrscheinlichkeit der Schädigung des Batteriemoduls verringert wird,
**dadurch gekennzeichnet, dass**
Mittel zur Herbeiführung des sicheren Zustands vorgesehen sind und der sichere Zustand herbeigeführt wird, wenn die Pole des Batteriemoduls weder zur Aufnahme noch zur Abgabe elektrischer Energie angeschlossen sind.

11. Eigensicheres Batteriemodul (EB),
**dadurch gekennzeichnet, dass**
eine Steuerung nach Anspruch 10 vorgesehen ist.

12. Eigensicheres Batteriemodul (EB) nach Anspruch 11,
**dadurch gekennzeichnet, dass**
zur Bestimmung des aktuellen Zustands des Batteriemoduls mindestens eine Sensorik (S) zur Erfassung physikalischer Größen des Batteriemoduls vorgesehen ist.

13. Eigensicheres Batteriemodul (EB) nach Anspruch 12,
**dadurch gekennzeichnet, dass**
die Mittel zur Herbeiführung des sicheren Zustands des Batteriemoduls, unter Berücksichtigung eines sensorisch ermittelten Ladezustands des Batteriemoduls und/oder eines sensorisch ermittelten Grades der mechanischen Unversehrtheit des Batteriemoduls und/oder eines sensorisch ermittelten Drucks im Inneren des Batteriemoduls und/oder einer sensorisch ermittelten Temperatur des Batteriemoduls und/oder eines eingesetzten Chemiesystems des Batteriemoduls und/oder eines sensorisch ermittelten aktuellen Zustands des Batteriemoduls bezüglich seiner Sicherheit, Auswirkungen eines schadhaften Batteriemoduls vermindern und/oder die Wahrscheinlichkeit der Schädigung des Batteriemoduls verringern.

14. Eigensicheres Batteriemodul (EB) nach Anspruch 11 bis 13,
**dadurch gekennzeichnet, dass**
Mittel zur Vorrausage des zeitlichen Verlaufs des Ladestroms des Batteriemoduls und/oder der Leistungsfähigkeit des Batteriemoduls und/oder der entnehmbaren Ladung des Batteriemoduls vorgesehen sind.

15. Eigensicheres Batteriemodul (EB) nach Anspruch 11,
**dadurch gekennzeichnet, dass**
Mittel zur Übermittlung von Informationen über den zeitlichen Verlauf des Ladestroms des Batteriemoduls und/oder der Leistungsfähigkeit des Batteriemoduls und/oder der entnehmbaren Ladung des Batteriemoduls vorgesehen an ein Batteriemanagementsystem und/oder an eine Wareneingangskontrolle für Batteriemodule und/oder an eine Fertigungseinrichtung für Batteriemodule vorgesehen sind.

16. Eigensicheres Batteriemodul (EB) nach Anspruch 11,
**dadurch gekennzeichnet, dass**
zur Herbeiführung des sicheren Zustands des Batteriemoduls mindestens eine Aktorik (A1, A2) vorgesehen ist.

17. Eigensicheres Batteriemodul (EB) nach Anspruch 16,
**dadurch gekennzeichnet, dass**
wenn die Pole des Batteriemoduls weder zur Aufnahme noch zur Abgabe elektrischer Energie angeschlossen sind, Mittel vorgesehen sind, mit denen eine Aktorik (A1, A2) zur Herbeiführung des sicheren Zustands des Batteriemoduls, insbesondere eine Vorrichtung zum Legen eines Strombypass und/oder eine Entladevorrichtung (Discharge Device) und/oder eine Aktorik (A1, A2) zur Schaltung der Ausgangsspannung des Batteriemoduls angesteuert und bedient wird, wobei mit der Aktorik (A1, A2),
- der Strombypass im Bereich des Batteriemoduls, insbesondere zwischen den Anschlüssen des Batteriemoduls geschaltet wird und/oder
- nachdem eine Feinschlusserkennung durchgeführt wird und zu diesem Zweck die zeitlichen Verläufe der Spannung des Batteriemoduls und/oder der Temperatur des Batteriemoduls aufgezeichnet und überwacht werden und, für den Fall, dass eine erhöhte Selbstentladung des Batteriemoduls auftritt, die Entladevorrichtung aktiviert und das Batteriemodul weitestgehend vollständig entladen wird.

18. Verwendung eines Verfahrens gemäß einem der Ansprüche 1 bis 9 und/oder einer Steuerung gemäß Anspruch 10 und/oder eines eigensicheren Batteriemoduls (EB) gemäß einem der Ansprüche 11 bis 17 in der Fahrzeugtechnik und/oder in der Energietechnik.
